# EUROPEAN PATENT APPLICATION

(11) **EP 4 722 050 A1**
(43) Date of publication of application: **08.04.2026**
(21) Application number: 25194586.1
(22) Date of filing: 07.08.2025
(51) Int. Cl.: B60R 25/20, B60R 25/24

(54) **IN-VEHICLE DEVICE, METHOD, AND PROGRAM**

(30) Priority: 03.10.2024 JP 2024174210
(71) Applicant: TOYOTA JIDOSHA KABUSHIKI KAISHA, Toyota-shi, Aichi-ken 471-8571 (JP)
(72) Inventor: TAKADA, Naoyuki, Toyota-shi, 471-8571 (JP)
(74) Representative: J A Kemp LLP

(57) **Abstract**

A storage device stores authentication information as information related to a digital key of a vehicle. An execution device acquires from a server located outside of the vehicle contract information that indicates whether a valid contract that allows the digital keys to be used exists. The execution device deletes information related to the digital key that the storage device stores on a condition that the acquired contract information indicates that the valid contract does not exist.

## Description

### CROSS-REFERENCE TO RELATED APPLICATIONS

This application is based upon and claims the benefit of priority from Japanese Patent Application No. 2024-174210, filed on October 3, 2024, the entire contents of which are incorporated herein by reference.

### BACKGROUND

### 1. Field

The following description relates to an in-vehicle device, a method, and a program.

### 2. Description of Related Art

JP2024-001797A discloses a digital key system. The digital key system includes an in-vehicle device, which is installed in a vehicle, and a mobile device. The in-vehicle device stores information related to the mobile device so that the mobile device can be used as a digital key.

In a digital key system, such as that described in the above patent document, a user may need to sign a contract to receive permission to use the digital key. In this case, however, when the user cancels the contract, the information related to the usable digital key may be left stored in the in-vehicle device.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an in-vehicle device includes a storage device and processing circuitry. The storage device stores information related to a digital key of a vehicle. The processing circuitry is configured to execute deletion control. The deletion control includes acquiring contract information from outside the vehicle, in which the contract information indicates whether there is a valid contract allowing the digital key to be used, and on condition that the acquired contract information indicates that the valid contract does not exist, deleting the information related to the digital key from the storage device.

In another general aspect, a method is executed by an in-vehicle device that stores information related to a digital key of a vehicle. The method includes acquiring, with the in-vehicle device, contract information, from outside the vehicle, indicating whether a valid contract allowing the digital key to be used exists, and deleting, with the in-vehicle device, the information related to the digital key from the in-vehicle device on condition that the acquired contract information indicates that the valid contract does not exist.

In a further general aspect, a program is executed by an in-vehicle device storing information related to a digital key of a vehicle. When the program is executed by the in-vehicle device, the program causes the in-vehicle device to perform operations including acquiring contract information, from outside the vehicle, indicating whether there is a valid contract allowing the digital key to be used, and deleting the information related to the digital key from the in-vehicle device on condition that the acquired contract information indicates that the valid contract does not exist.

Other features and aspects will be apparent from the following detailed description, the drawings, and the claims.

### BRIEF DESCRIPTION OF THE DRAWINGS

Fig. 1 is a schematic diagram illustrating a control system in accordance with an embodiment.
Fig. 2 is a diagram illustrating a sequence of processes performed by a management system in accordance with the embodiment in response to a deletion request.
Fig. 3 is a flowchart illustrating a deletion control process executed by a digital key ECU of the embodiment.
Fig. 4 is a timing chart illustrating a storage state of different types of information when a vehicle is continuously in a communication-enabled state allowing for communication with the management server in the embodiment.
Fig. 5 is a timing chart illustrating the storage state of different types of information in a communication state in which the vehicle shifts from a communication-disabled state to a communication-enabled state.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

An embodiment of an in-vehicle device will now be described with reference to the drawings. A management system 10 will now be described.

### Overview of Management System

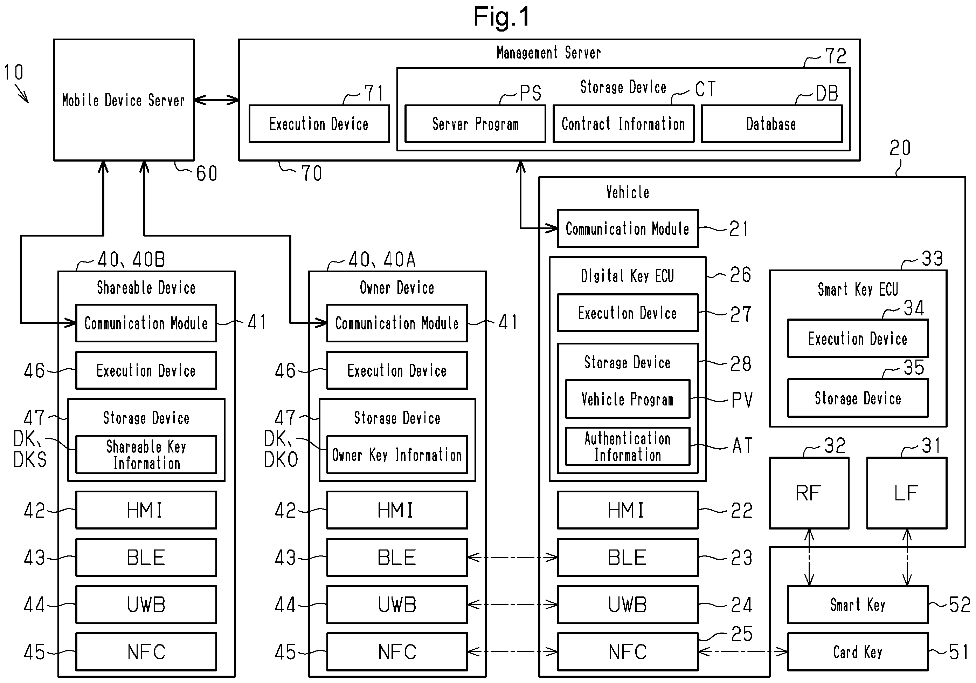

As shown in Fig. 1, the management system 10 manages usable digital keys for a vehicle 20. Car Connectivity Consortium (CCC) has developed a standard for digital keys. The digital keys of the present embodiment comply with the CCC standard but may be applied to standards and systems other than those of the CCC.

The management system 10 includes a vehicle 20, mobile devices 40, a card key 51, a proximity key 52 (e.g. Smart Key^{®}), a mobile device server 60, and a management server 70. The mobile devices 40 are used as the digital keys.

The vehicle 20 includes a communication module 21, a human machine interface (HMI) 22, a BLE module 23 (e.g. a low energy wireless module such as a Bluetooth^{®} low energy (BLE) module'), an ultra-wideband (UWB) module 24, a near field communication (NFC) module 25, and a digital key ECU 26, which acts as an in-vehicle device.

The communication module 21 communicates with the management server 70 via a wireless communication network. The HMI 22 includes an input device that accepts operations of a user and a presentation device that presents information to the user through images, voice, and/or the like. The presentation device is, for example, a monitor or a speaker.

The BLE module 23 performs BLE communication which is a type of short-range communication, with the mobile devices 40. The UWB module 24 performs UWB communication with the mobile devices 40. The UWB module 24 measures the distance between the mobile devices 40 and the vehicle 20.

The NFC module 25 performs NFC communication which is a type of short-range communication, with the mobile devices 40. Further, the NFC module 25 performs NFC communication, which is a type of short-range communication, with the card key 51.

The digital key ECU 26 is installed in the vehicle 20. The digital key ECU 26 manages the digital keys of the vehicle 20. The digital key ECU 26 includes an execution device 27 and a storage device 28. The storage device 28 stores authentication information AT, which is information related to the digital keys. The authentication information AT is used to authenticate a digital key so that the digital key can be used to control the vehicle 20. The authentication information AT is provided for each authenticated digital key.

When a digital key is authenticated, the digital key can be used to control the vehicle 20. For example, when the digital key ECU 26 authenticates a digital key, the digital key ECU 26 permits unlocking of the vehicle 20 with the digital key. Additionally, for example, when the digital key ECU 26 authenticates the digital key, the digital key ECU 26 permits activation of the vehicle 20 with the digital key.

The storage device 28 stores various programs for processing the digital keys. The execution device 27 is a CPU. The execution device 27 executes the programs to perform digital key processing.

The storage device 28 stores a vehicle program PV. When executed by the execution device 27, the vehicle program PV has the execution device 27 perform deletion control that deletes the authentication information AT. The execution device 27 executes the vehicle program PV to perform deletion control that deletes the authentication information AT.

Further, the storage device 28 stores various programs for processing the card key 51. The execution device 27 executes the programs to process the card key 51.

When, for example, the card key 51 is held in the vicinity of an antenna arranged in an outer portion of the NFC module 25 and the NFC module 25 establishes communication with the card key 51, the execution device 27 determines that the card key 51 has been authenticated. Thus, the execution device 27 permits unlocking of the doors of the vehicle 20.

Additionally, for example, when the card key 51 is placed in the vicinity of an antenna of the NFC module 25, which is arranged near a driver seat, and the NFC module 25 establishes communication with the card key 51, the execution device 27 determines that the card key 51 has been authenticated. Thus, the execution device 27 permits activation of the vehicle 20.

The vehicle 20 includes a low frequency (LF) module 31, a radio frequency (RF) module 32, and a proximity key ECU 33 (e.g. Smart Key^{®} ECU).

The LF module 31 performs wireless communication with the proximity key 52 through LF signals. The RF module 32 performs wireless communication with the proximity key 52 through RF signals.

The proximity key ECU 33 controls the proximity key 52 of the vehicle 20. The proximity key ECU 33 includes an execution device 34 and a storage device 35. The storage device 35 stores various programs for the proximity key 52. The execution device 34 executes the programs stored in the storage device 35 to perform a process for authenticating the proximity key 52.

When, for example, an outer handle of the vehicle 20 is operated, the execution device 34 transmits the LF signal from the LF module 31 to the proximity key 52. Upon receipt of the LF signal, the proximity key 52 sends the RF signal including an authentication signal, set for the proximity key 52, to the RF module 32. Then, based on the authentication signal included in the RF signal received from the proximity key 52 by the RF module 32, the proximity key ECU 33 authenticates the proximity key 52. When the authentication signal received by the proximity key ECU 33 matches a predetermined authentication signal, the proximity key ECU 33 authenticates the proximity key 52. Subsequently, for example, the proximity key ECU 33 permits unlocking of the doors of the vehicle 20 or activation of the vehicle 20.

Each mobile device 40 is a portable information device such as a smartphone. The mobile device 40 includes a communication module 41, an HMI 42, a BLE module 43, a UWB module 44, an NFC module 45, an execution device 46, and a storage device 47.

The communication module 41 communicates with the mobile device server 60 via a wireless communication network. The HMI 42 includes an input device that accepts operations of the user and a presentation device for presenting information to the user through images, voice and/or the like. The presentation device is, for example, a monitor or a speaker.

The BLE module 43 performs BLE communication which is a type of short-range communication, with the vehicle 20. The UWB module 44 performs UWB communication with the vehicle 20. The NFC module 45 performs NFC communication, which is a type of short-range communication, with the vehicle 20.

The storage device 47 stores key information DK related to the digital keys. The key information DK indicates the digital keys. Further, the key information DK is information allowing a mobile device 40 to be used as the digital key.

The storage device 47 stores various programs for performing digital key processing. The programs stored by the storage device 47 include, for example, a mobile device application and a digital key framework. The mobile device application is an application for storing and deleting the key information DK. The digital key framework is a program using an Application Programming Interface (API) of an operating system (OS) providing the functionalities for pairing a mobile device 40 and allowing it to be used as a digital key. The execution device 46 executes various programs stored in the storage device 47 to perform processes related to the storage and deletion of the key information DK.

The mobile devices 40 include an owner device 40A and shareable devices 40B. In Fig. 1, only one shareable device 40B is shown. The owner device 40A stores owner key information DKO, which indicates that the owner device 40A is an owner key, as the key information DK. Only one owner key can be registered to each vehicle 20. Thus, there is only one owner key for each vehicle 20. The owner key information DKO allows the mobile device 40 to be used as the owner device 40A.

The owner key information DKO includes, for example, vehicle information that identifies the subject vehicle 20, identification information used for management of the digital key, verification information verifying the digital key, public key information of the owner device 40A, and public key information of the vehicle 20. The mobile device 40 designated as the owner device 40A is paired with the vehicle 20 so that the mobile device 40 can store the owner key information DKO in order to function as the owner device 40A.

Each shareable device 40B stores shareable key information DKS, which indicates that the shareable device 40B is a shareable key, as the key information DK. One or more shareable keys which are digital keys, can be registered to each vehicle 20. In other words, there may be more than one shareable key for each vehicle 20.

The shareable key information DKS is information that allows a mobile device 40 to be used as a shareable device 40B. The shareable key information DKS includes, for example, vehicle information that identifies the subject vehicle 20, identification information used for management of the digital key, verification information verifying the digital key, and an authentication package for authenticating registration of the mobile device 40. The authentication package includes signature information, password information, activation time information, expiry time information, and public key information of the shareable device 40B.

A mobile device 40 used as a shareable device 40B stores the shareable key information DKS so that it can be used in a manner similar to the owner device 40A. This allows the mobile device 40 to be used as the shareable device 40B.

In other words, the shareable key is a digital key that can be used in a manner similar to the digital key of the owner device 40A. As long as the owner key is registered to the vehicle 20, the shareable key can be used as a digital key allowing usage of the shareable device 40B, which is separate from the owner device 40A.

Registration of the digital keys to the vehicle 20 allows for usage of the digital keys. Thus, in a state in which a digital key is registered, the vehicle 20 stores the authentication information AT, and the mobile device 40 stores the key information DK.

The mobile device server 60 acts to relay communication between the mobile devices 40 and the management server 70. A mobile device server 60 is provided for each type of mobile device 40. In other words, the mobile device server 60 that communicates with a first type of the mobile device 40 differs from a mobile device server 60 that communicates with a second type of the mobile device 40. For example, type refers to a model of the mobile device 40, and a different mobile device server 60 is provided for each model of the mobile device 40. Additionally, type refers to a communication network used by the mobile device 40, and a different mobile device server 60 is provided for each communication network used by the mobile devices 40.

Each mobile device server 60 relays communication to the management server 70. Thus, different types of mobile devices 40 can have communication relayed to the management server 70 by the corresponding mobile device server 60. Fig. 1 shows only one mobile device server 60.

### Management Server

The management server 70 manages the digital keys. The management server 70 is configured to communicate with the vehicle 20 and the mobile devices 40. The management server 70 includes an execution device 71 and a storage device 72. The storage device 72 stores a server program PS, contract information CT, and a database DB. The execution device 71 executes the server program PS to delete a digital key from the database DB.

The contract information CT indicates whether or not a contract has been made between the owner of the vehicle 20 and an operator of the digital key services. When the contract is made, the digital keys can be used by the owner of the vehicle 20.

In the database DB, each digital key is associated with a vehicle 20 and a registered mobile device 40. The database DB is organized such that data is organized for each vehicle 20. In a state in which the digital keys are registered, the data stored in the management server 70 indicates information of the mobile devices 40, which store the information DK indicating the digital keys.

### Sequence of Processes in Response to a Deletion Request by the Management Server

A sequence of processes performed in response to a deletion request in the management system 10 will now be described. When the management server 70 receives a change request D10, the management system 10 performs a sequence of processes to delete the digital keys. The change request D10 is a request to change the contract information CT from a valid contract state to an invalid contract state. For example, the management server 70 receives the change request D10 when the owner device 40A is operated.

The processes executed by the execution device 27 of the vehicle 20, the execution device 46 of the mobile devices 40, and the execution device 71 of the management server 70 will now be described.

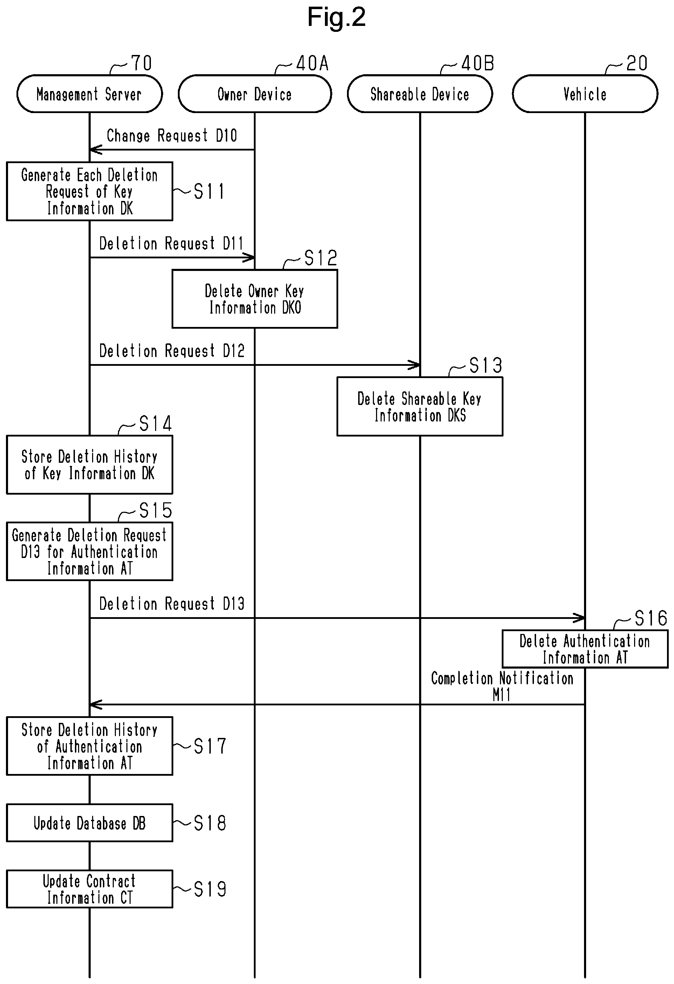

As shown in Fig. 2, the management system 10 performs a sequence of processes to delete the registered digital keys. When the management server 70 receives the change request D10, the management server 70 starts execution of the server program PS. When the management server 70 starts execution of the server program PS, the management server 70 performs step S11.

In step S11, the management server 70 generates a request for deletion of all of the key information DK. The key information DK is information of the digital keys that can be used in accordance with the contract information CT and is the subject of the change request D10.

More specifically, the management server 70 specifies the owner key that can be used in accordance with the contract information CT and is indicated in the contract. The management server 70 also specifies the shareable keys that are registered based on a registration request from the owner device 40A, which stores the owner key information DKO indicating the owner key. Then, the management server 70 generates deletion requests D11 and D12. The deletion request D11 deletes the specified owner key. The deletion request D12 deletes the specified shareable keys.

Subsequently, the management server 70 sends the deletion request D11 to the owner device 40A. When the owner device 40A receives the deletion request D11, the owner device 40A performs step S12.

In step S12, the owner device 40A deletes the owner key information DKO in accordance with the deletion request D11. Thus, the owner device 40A can no longer be used as the owner key.

After the management server 70 transmits the deletion request D11, the management server 70 sends the deletion request D12 to the shareable devices 40B. When the shareable devices 40B receive the deletion request D12, the shareable devices 40B each perform step S13.

In step S13, each shareable device 40B deletes the shareable key information DKS in accordance with the deletion request D12. Thus, the shareable device 40B can no longer be used as the shareable key.

After the management server 70 transmits the deletion request D12, the management server 70 proceeds to step S14. In step S14, the management server 70 stores a deletion history of the key information DK in the database DB. Then, the management server 70 proceeds to step S15.

In step S15, the management server 70 generates a deletion request D13 to delete the authentication information AT for authenticating the owner key specified in step S11 and to delete the authentication information AT for authenticating the shareable keys specified in step S11.

Subsequently, the management server 70 sends the deletion request D13 to the vehicle 20. When the vehicle 20 receives the deletion request D13, the vehicle 20 performs step S16.

In step S16, the vehicle 20 deletes the authentication information AT in accordance with the deletion request D13. Thus, the vehicle 20 will no longer be able to authenticate the digital keys.

Afterwards, the vehicle 20 sends a completion notification M11 to the management server 70 indicating that the deletion of the authentication information AT has been completed.

When the management server 70 receives the completion notification M11, the management server 70 performs step S17. In step S17, the management server 70 stores the deletion history of the authentication information AT in the database DB. Then, the management server 70 proceeds to step S18.

In step S18, the management server 70 updates the database DB. More specifically, the management server 70 deletes information of the mobile devices 40, which store the key information DK indicating the digital keys, from the data of the subject vehicle 20. Then, the management server 70 proceeds to step S19.

In step S19, the management server 70 updates the contract information CT to indicate that there is no valid contract. Afterwards, the management server 70 ends the sequence of processes.

In this manner, for the subject of the change request D10, the management system 10 deletes information of the digital keys that can be used only if there is a valid contract. Thus, the management system 10 manages the digital keys, which can be used only when there is a valid contract, of the subject of the change request D10, so that they cannot be used.

### Deletion Control of Vehicle

A deletion control for deleting the authentication information AT from the vehicle 20 will now be described.

When the communication state of the communication module 21 and the management server 70, which is located at a position remote from the vehicle 20, shifts from a communication-disabled state to a communication-enabled state, the execution device 27 starts execution of the vehicle program PV. When the storage device 28 stores no authentication information AT, the execution device 27 does not execute the vehicle program PV.

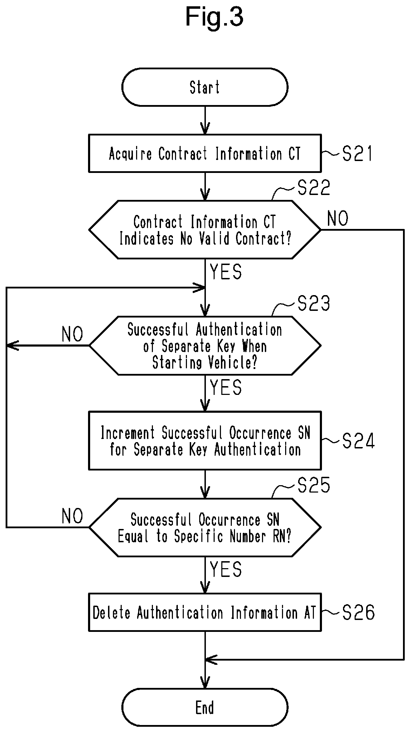

As shown in Fig. 3, when the execution device 27 starts execution of the vehicle program PV, the execution device 27 performs step S21. In step S21, the execution device 27 acquires the contract information CT from the management server 70. Therefore, the execution device 27 acquires the contract information CT when the communication state with the management server 70 located outside of the vehicle 20 shifts from a communication-disabled state to a communication-enabled state.

More specifically, when the communication state of the communication module 21 is in a communication-enabled state, the communication module 21 acquires the contract information CT from the management server 70 in predetermined cycles. Accordingly, the communication module 21 stores information synchronized with the contract information CT stored in the storage device 72 of the management server 70. When the communication state shifts from a communication-disabled state to a communication-enabled state, the communication module 21 acquires the contract information CT from the management server 70 to synchronize the information stored in the communication module 21 with the latest contract information CT. In this state, the execution device 27 acquires the contact information CT from the communication module 21 to acquire information synchronized with the latest contract information CT stored in the storage device 72 of the management server 70. Afterwards, the execution device 27 proceeds to step S22.

In step S22, the execution device 27 determines whether the acquired contract information CT indicates that there is no valid contract. More specifically, when the acquired contract information CT is not the same as the contract information CT acquired before the communication state shifted to a communication-disabled state, the execution device 27 determines that the acquired contract information CT indicates that there is no valid contract.

In other words, the execution device 27 gives an affirmative determination when the acquired contract information CT does not include the same contract as the contract included in the previously acquired contract information CT. The execution device 27 gives an affirmative determination when the acquired contract information CT does not include any valid contract or when the acquired contract information CT includes a contract that differs from the contract included in the previously acquired contract information CT. When the acquired contract information CT indicates a valid contract (S22:NO), the execution device 27 ends the sequence of processes. In this case, the execution device 27 does not delete the authentication information AT.

When the acquired contract information CT indicates that there is no valid contract (S22: YES), the execution device 27 proceeds to step S23. In step S23, the execution device 27 determines whether a key, such as the card key 51 or the proximity key 52, differing from the digital key used to activate the vehicle 20 has been successfully authenticated.

More specifically, if the card key 51 is successfully authenticated when the vehicle 20 is activated, that is, if authentication of the proximity key 52 by the proximity key ECU 33 is successful when the vehicle 20 is activated, the execution device 27 gives an affirmative determination in step S23. Subsequently, the execution device 27 proceeds to step S24.

In step S24, when a key differing from the digital keys used to activate the vehicle 20 is successfully authenticated, the execution device 27 increments a counter indicating successful occurrences SN. The counter, for example, is included in the storage device 28. Afterwards, the execution device 27 proceeds to step S25.

In step S25, the execution device 27 determines whether the successful occurrences SN is equal to a specified number RN. The specified number RN is two or greater and set in advance based on tests and simulations. The specified number RN is, for example, set to the number of times a user can be expected to consecutively use a key differing from the digital keys. In the present embodiment, the specified number RN is two.

When the successful occurrences SN is less than the specified number RN (S25: NO), the execution device 27 returns to step S23. When the successful occurrences SN is equal to the specified number RN (S25: YES), the execution device 27 proceeds to step S26.

In step S26, the execution device 27 deletes the authentication information AT. More specifically, the execution device 27 deletes the authentication information AT of every one of the digital keys stored in the storage device 28. Then, the execution device 27 ends the series of processes in the present cycle.

In this manner, when the acquired contract information CT indicates that there is no valid contract (S22: YES), the execution device 27 deletes the authentication information AT in step S26. Additionally, when the successful occurrences SN is equal to the specified number RN (S25: YES), the execution device 27 deletes the authentication information AT in step S26. The execution device 27 executes the vehicle program PV to execute the deletion control.

### Operation of Present Embodiment

The operation of the present embodiment will now be described for a case in which the communication state of the vehicle 20 and the management server 70 is continuously in a communication-enabled state and for a state in which the communication state of the vehicle 20 and the server 70 shifts from a communication-disabled state to a communication-enabled state.

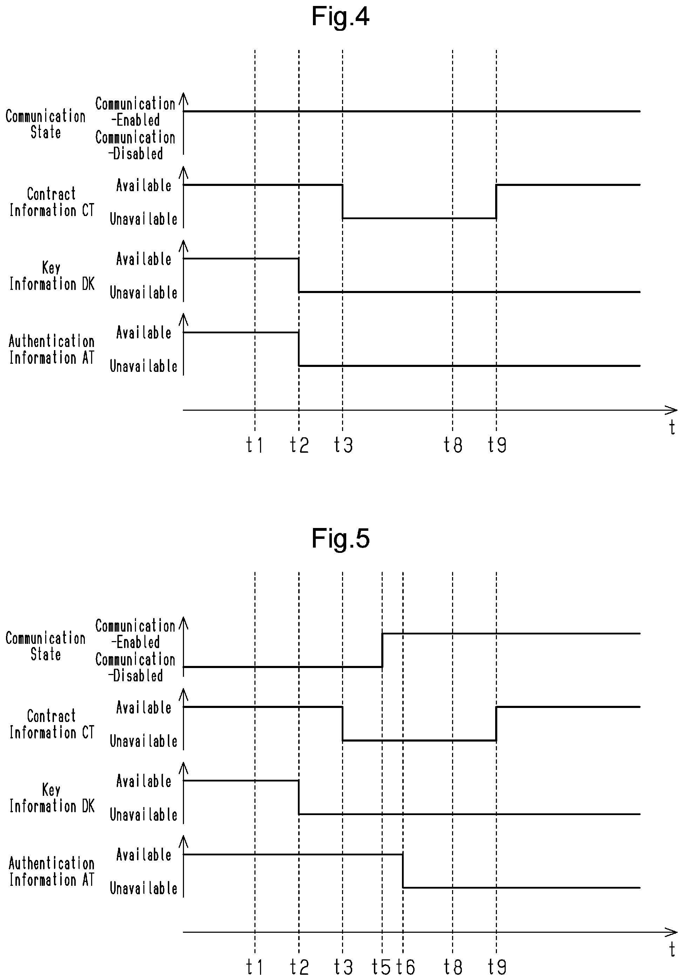

As shown in Fig. 4, in a case in which the communication state of the communication module 21 and the management server 70 is continuously in a communication-enabled state, at time t1, the management server 70 receives the change request D10. In this case, at time t1, the management system 10 starts the sequence of processes for deleting the digital keys illustrated in Fig. 2.

When the management system 10 starts the sequence of processes for deleting the digital keys, at time t2 which is after time t1, the mobile devices 40 delete the key information DK in response to the deletion requests D11 and D12 from the management server 70. Further, at time t2, the vehicle 20 deletes the authentication information AT in response to the deletion request D13 from the management server 70.

Subsequently, at time t3, which is after time t2, the management server 70 updates the contract information CT to indicate a state in which there is no valid contract.

Afterwards, at time t8, which is after time t3, the management server 70 receives an update request of the contract information CT from the mobile devices 40 when a new owner of the vehicle 20 signs a new contract with the operator of the digital key services.

Then, at time t9 which is after time t8, the management server 70 updates the contract information CT. Accordingly, the contract information CT is updated to a state indicating that there is a new valid contract.

Afterwards, until the mobile device 40 used as the owner device 40A is paired, the mobile device 40 remains in a state in which it does not store the key information DK and the authentication information AT. Further, the vehicle 20 remains in a state in which it does not store the authentication information AT until the mobile device 40 used as the owner device 40A is paired.

As shown in Fig. 5, in a case in which the communication state of the communication module 21 and the management server 70 is in the communication-disabled state, at time t1, the management server 70 receives the change request D10. In this case, at time t1, the management system 10 starts the sequence of process for deleting the digital keys illustrated in Fig. 2.

At time t2, which is after time t1, the mobile devices 40 delete the key information DK in response to the deletion requests D11 and D12 from the management server 70. At time t2, the vehicle 20 cannot receive the deletion request D13 from the management server 70. Thus, the digital key ECU 26 is in a state in which it continues to store the authentication information AT.

Then, at time t3, which is after time t2, the management server 70 updates the contract information CT to a state indicating that there is no valid contract.

Afterwards, at time t5, which is after time t3, the communication state of the communication module 21 and the management server 70 shifts from a communication-disabled state to a communication-enabled state. In this case, at time t5, the execution device 27 starts the execution of the vehicle program PV and thus starts the sequence of processes illustrated in Fig. 3.

Then, at time t6, which is after time t5, during the activation of the vehicle 20, the successful occurrences SN of authentication of a key that differs from the digital keys becomes equal to the specified number RN, and the execution device 27 deletes the authentication information AT. Accordingly, after time t6, the vehicle 20 is in a state in which it does not store the authentication information AT.

### Advantages of Present Embodiment

(1) In the deletion control, on condition that the contract information CT does not indicate a valid contract, the execution device 27 deletes information of the digital keys from the authentication information AT. Therefore, after the contract becomes invalid, the digital key ECU 26 will no longer store the authentication information AT of the digital keys that could be used under the valid contract.
(2) In the deletion control, on condition that the contract information CT does not indicate a valid contract and a key that differs from the digital keys is authenticated, the execution device 27 deletes the authentication information AT. Even if the digital keys cannot be used because the authentication information AT is deleted, the authentication of the key differing from the digital keys allows it to be used. Thus, the user can continue to operate the vehicle 20 with the key, which is not a digital key, and the digital key ECU 26 can avoid a situation in which the vehicle 20 cannot be used even if a contract becomes invalid and the authentication information AT of the digital keys that can be used under the valid contract is deleted.
(3) In the deletion control, on condition that the contract information CT does not include a valid contract and the occurrence of successful authentication of a key differing from the digital keys is the specified number RN, which is the specified number of two or greater, the execution device 27 deletes the authentication information AT. When the occurrence of successful authentication of the differing key is the specified number RN, there is a high probability that the vehicle 20 can be used with the differing key without any difficulties. Thus, even after the contract becomes invalid and the authentication information AT of the digital keys that could be used under the valid contract is deleted, the digital key ECU 26 allows the vehicle 20 to be continuously used.
(4) In the deletion control, on condition that the contract information CT does not indicate a valid contract and the occurrence of successful authentication of a key differing from the digital keys during activation of the vehicle 20 is the specified number RN, the execution device 27 deletes the authentication information AT. When the occurrence of successful authentication of the differing key during activation of the vehicle 20 is the specified number RN, there is a high probability that the vehicle 20 can be used with the differing key. This allows the vehicle 20 to be activated even when a contract becomes invalid and the authentication information AT of the digital keys used under the contract is deleted.
(5) In the deletion control, the execution device 27 acquires the contract information CT when the communication state of the execution device 27 and the management server 70 shifts from a communication-disabled state to a communication-enabled state. Thus, even when the contract information CT is changed while the communication state is in a communication-disabled state, the execution device 27 can delete the authentication information AT in accordance with the changed contract information CT.
(6) When the communication state of the execution device 27 and the management server 70 is in a communication-enabled state and the execution device 27 receives the deletion request D13 for the digital keys from the management server 70, the execution device 27 deletes the authentication information AT. Thus, when the communication state is in a communication-enabled state, the execution device 27 deletes the authentication information AT in response to the deletion request D13 from the management server 70.

When the communication state of the execution device 27 and the management server 70 is in a communication-disabled state, the execution device 27 cannot receive the deletion request D13 from the management server 70. Thus, the authentication information AT cannot be deleted in response to the deletion request D13. In this regard, with the above configuration, the execution device 27 acquires the contract information CT when the communication state of the execution device 27 and the management server 70 shifts from a communication-disabled state to a communication-enabled state. Then, the execution device 27 deletes the contract information CT on condition that there is no valid contract indicated in the acquired contract information CT. Therefore, even if the communication state is in a communication-disabled state and the execution device 27 cannot delete the authentication information AT because the deletion request D13 from the management server 70 cannot be received, the execution device 27 can delete the authentication information AT when the communication state shifts from a communication-disabled state to a communication-enabled state.

### Modifications

The above embodiments may be modified as described below. The above embodiments and the following modifications may be combined as long as the combined modifications remain technically consistent with each other.

The vehicle 20 does not need to include all of the BLE module 23, the UWB module 24, and the NFC module 25. The vehicle 20 can perform short-range wireless communication with the mobile devices 40 as long as it includes at least one of these modules. Further, the vehicle 20 is not limited to the described modules and can include different modules as long as short-range wireless communication can be performed.

Items related to the digital keys in the above embodiment do not need to comply with the CCC standard.

The sequence of processes for deleting the registered digital key performed by the management system 10 is not limited to the example of the above embodiment. For example, the management server 70 may send the deletion request D13 to the vehicle 20 before sending the deletion requests D11 and D12 to the owner device 40A and the shareable device 40B. Further, the management server 70 may send the deletion requests D11 and D12 to the owner device 40A and shareable device 40B after receiving the completion notification M11 and performing step S17. Accordingly, the management system 10 may first delete the authentication information AT and then delete the key information DK.

The in-vehicle device is not limited to the digital key ECU 26. For example, the in-vehicle device may be a central ECU that coordinates and manages a plurality of ECUs included in the vehicle 20. Further, the in-vehicle device may be an ECU that includes the digital key ECU 26 and the proximity key ECU 33.

The digital key ECU 26 may be configured by processing circuitry that includes one or more processors executing various processes in accordance with a computer program (software). Further, the digital key ECU 26 may include one or more dedicated hardware circuits such as an application-specific integrated circuit (ASICs), that executes at least some of the various processes or circuitry including a combination of such hardware circuits. The processor includes a CPU and memories such as a RAM and a ROM. The memory stores program codes and instructions configured to have the CPU to execute a process. The memory, which is a non-transitory computer-readable medium, includes any medium that can be accessed by a general-purpose computer or special-purpose computer. The program may be stored in a CD-ROM or a non-transitory data storage medium that is computer-readable and may be distributed as a program product. The program may be provided by an information provider connected to a network such as the internet as a downloadable program product. In this regard, in the same manner, the proximity key ECU 33, the mobile devices 40, and the management server 70 may be distributed as program products.

As described in the above embodiment, the shareable device 40B includes a functionality for receiving a shareable key. A mobile device 40 that has the functionality for receiving a digital key in a manner similar to the shareable device 40B is defined as a receiving device.

The mobile device server 60 does not need to be provided for each type of the mobile device 40. The mobile devices 40 and the management server 70 are at least capable of performing wireless communication. The mobile device server 60 may be omitted. The mobile devices 40 are at least capable of performing wireless communication directly with the management server 70.

The management server 70 may include a plurality of servers. For example, the management server 70 may include a server that stores the database DB and a server that executes the server program PS. Additionally, for example, the management server 70 may include a server that communicates with the vehicle 20 and a server that communicates with the mobile device server 60. In this case, these servers are configured to communicate with each other.

The management server 70 does not need to store the database DB. For example, for each digital key, the management server 70 may manage the combination of the key information DK of the mobile device 40 and the authentication information AT of the digital key ECU 26. As another option, for example, the management server 70 may store only the contract information CT.

### Various Types of Information

As long as the authentication information AT is for authenticating a digital key when the digital key is used, the authentication information AT is not limited to the examples described in the above embodiment. For example, the authentication information AT may be a symmetric key shared by the digital key ECU 26 and the mobile device 40. Additionally, for example, the authentication information AT may be a shared secret key.

The configuration of the information in the key information DK is not limited to the examples of the above embodiment. For example, the owner key information DKO may include information that indicates the type of the digital key. The type of the digital key is, for example, information indicating either one of the owner key or the shareable key.

Information related to the digital key that is stored in the digital key ECU 26 is not limited to the authentication information AT and may be any information related to the digital key. For example, information related to the digital key may be for identifying the digital key.

Information related to the digital key that is stored in the mobile devices 40 is not limited to the key information DK and may be any information related to the digital key. For example, information related to the digital key may be for identifying the digital key.

Information related to the digital key that is stored in the digital key ECU 26 may be the same as or differ from information related to the digital key stored in the mobile devices 40 in the above embodiment.

### Deletion Control

The execution device 27 may execute the deletion control in a predetermined cycle even if the communication state is in a communication-enabled state. Accordingly, when the communication state is in a communication-enabled state, on condition that the contract information CT does not indicate a valid contract, the execution device 27 may delete the authentication information AT. In this case, if the communication state of the execution device 27 and the management server 70 is in a communication-enabled state, the execution device 27 does not need to delete the authentication information AT when the execution device 27 receives the deletion request D13 from the management server 70.

The time at which the execution device 27 acquires the contract information CT is not limited to the example described in the above embodiment. For example, the execution device 27 may acquire the contract information CT in a predetermined cycle when the communication state is in a communication-enabled state.

The condition under which the execution device 27 deletes the authentication information AT does not need to be that the occurrences of successful authentication of a key differing from the digital keys during the activation of the vehicle 20 is the specified number RN. For example, the execution device 27 may increment the counter for the successful occurrences SN when the key differing from the digital keys is authenticated in a situation other than when the vehicle 20 is activated. An example of an authentication performed under a situation other than when the vehicle 20 is activated is a situation in which a door of the vehicle 20 is unlocked or locked. Thus, the execution device 27 may delete the authentication information AT when the occurrence of successful authentication of the key differing from the digital keys is the specified number RN in a situation other than when the vehicle 20 is activated.

The occurrence of successful authentication of a key differing from the digital keys for the specified number RN does not need to be a condition for the execution device 27 to delete the authentication information AT. For example, the condition for the execution device 27 to delete the authentication information AT may be that the key differing from the digital keys is authenticated once. In this case, in a control device, the execution device 27 may omit steps S24 and S25.

The execution device 27 may delete the authentication information AT regardless of successful authentication of a key differing from the digital keys. The minimum condition for the execution device 27 to delete the authentication information AT is that the acquired contract information CT does not indicate a valid contract.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An in-vehicle device (26) comprising:
a storage device (28) and processing circuitry (27), wherein
the storage device (28) stores information related to a digital key of a vehicle (20), and
the processing circuitry (27) is configured to execute deletion control including:
acquiring contract information from outside the vehicle (20), in which the contract information indicates whether there is a valid contract allowing the digital key to be used, and
on condition that the acquired contract information indicates that the valid contract does not exist, deleting the information related to the digital key from the storage device (28).

2. The in-vehicle device (26) according to claim 1, wherein the processing circuitry (27) is configured to delete the information related to the digital key in the deletion control on condition that the acquired contract information indicates that the valid contract does not exist and a key of the vehicle (20) differing from the digital key is authenticated.

3. The in-vehicle device (26) according to claim 2, wherein the processing circuitry (27) is configured to delete the information related to the digital key in the deletion control on condition that the acquired contract information indicates that the valid contract does not exist and occurrence of successful authentication of the key that differs from the digital key is a specified number of two or greater.

4. The in-vehicle device (26) according to claim 3, wherein the processing circuitry (27) is configured to delete the information related to the digital key in the deletion control on condition that the acquired contract information indicates that the valid contract does not exist and the occurrence of successful authentication of the key that differs from the digital key is the specified number of two or greater when the vehicle (20) is activated.

5. The in-vehicle device (26) according to any one of claims 1 to 4, wherein the processing circuitry (27) is configured to acquire the contract information when a communication state of the vehicle (20) with an outside server (70) shifts from a communication-disabled state to a communication-enabled state in the deletion control.

6. The in-vehicle device (26) according to claim 5, wherein when the communication state is in the communication-enabled state, the processing circuitry (27) is configured to delete the information related to the digital key from the storage device (28) in response to a request, from a server (70) located outside the vehicle (20), to delete the information related to the digital key.

7. A method executed by an in-vehicle device (26) that stores information related to a digital key of a vehicle (20), the method comprising:
acquiring, with the in-vehicle device (26), contract information, from outside the vehicle (20), indicating whether a valid contract allowing the digital key to be used exists; and
deleting, with the in-vehicle device (26), the information related to the digital key from the in-vehicle device (26) on condition that the acquired contract information indicates that the valid contract does not exist.

8. A program executed by an in-vehicle device (26) storing information related to a digital key of a vehicle (20), wherein when the program is executed by the in-vehicle device (26), the program causes the in-vehicle device (26) to perform operations comprising:
acquiring contract information, from outside the vehicle (20), indicating whether there is a valid contract allowing the digital key to be used, and
deleting the information related to the digital key from the in-vehicle device (26) on condition that the acquired contract information indicates that the valid contract does not exist.
